# EUROPEAN PATENT APPLICATION

(11) **EP 3 490 054 A1**
(43) Date of publication of application: **29.05.2019**
(21) Application number: 18185921.6
(22) Date of filing: 26.07.2018
(51) Int. Cl.: H01M 10/42, H01M 10/48

(54) **ALARM SIGNAL OUTPUT APPARATUS, DETECTION ALARM DEVICE, AND DETECTION ALARM PLATFORM SYSTEM**

(30) Priority: 27.11.2017 CN 201711204576
(71) Applicant: Siterwell Electronics Co., Limited, Jiangbei District Ningbo Zhejiang Province 315034 (CN)
(72) Inventor: Wang, Jiejun, Ningbo City, Zhejiang Province (CN)
(74) Representative: Cabinet Chaillot

(57) **Abstract**

The present invention is applicable to the field of security and protection, and provides an alarm signal output apparatus, a detection alarm device, and a detection alarm platform system. The alarm signal output apparatus can be disposed in a battery position of a device under test, and is connected to a power output end of the device under test. The alarm signal output apparatus includes: at least one battery installation space; and an alarm signal output unit. The alarm signal output unit can be electrically connected to a battery, and outputs an alarm signal externally in a wireless manner when detecting a change in a voltage or current of the device under test.

## Description

### Technical Field

The present invention relates to the field of security and protection, and in particular, to an alarm signal output apparatus, a detection alarm device, and a detection alarm platform system.

### Background Art

In order to avoid or prevent the occurrence of some events from causing harmful consequences, usually a detection apparatus (such as an alarm) may be used to remind or warn a user that he/she should take some action to prevent or avoid the occurrence of an event, or that he/she should take remedial measures when an event occurs, or the like.

A common detection apparatus includes a heat alarm, a smoke alarm, a PIR alarm, a magnetic door alarm, a carbon monoxide alarm, a combustible gas alarm, a formaldehyde alarm, a flooding alarm, a dust alarm, a VOC alarm, and the like.

An alarm module of an existing detection apparatus is connected to a control module and is controlled by the control module. When detecting a danger, the control module can control the alarm module to output an alarm signal. However, affected by factors such as timeliness of processing and transmitting signals by the control module, the timeliness of outputting the alarm signal by the alarm module will be affected, that is, the alarm signal cannot be output timely when a danger occurs, thus easily causing cause some irreparable damage.

In addition, only by removing and replacing an original detection apparatus entirely can an existing detection apparatus be transformed and upgraded to an apparatus with a timely alarm capability. Thus, it easily wastes a large amount of resources and places a burden on the environment.

### Summary of the Invention

Embodiments of the present invention provide an alarm signal output apparatus, aimed at solving the problem in the prior art that an original detection apparatus needs to be removed and replaced entirely when a detection apparatus cannot give an alarm timely and needs to be transformed and updated.

The embodiments of the present invention are implemented as follows: an alarm signal output apparatus, wherein the alarm signal output apparatus can be disposed in a battery position of a device under test, and is connected to a power input end of the device under test; and
the alarm signal output apparatus includes:
at least one battery installation space; and
an alarm signal output unit integrated with the battery installation space;
wherein the alarm signal output unit can be connected to the device under test, and outputs an alarm signal externally in a wireless manner when detecting a change in a voltage or current of the device under test.

The embodiments of the present invention further provide an alarm signal output apparatus, wherein the alarm signal output apparatus can be disposed in a battery position of a device under test, and is connected to a power input end of the device under test; and
the alarm signal output apparatus includes:
at least one battery installation space in which a battery is installed; and
an alarm signal output unit integrated with the battery installation space;
wherein the alarm signal output unit can be electrically connected to the battery, and outputs an alarm signal externally in a wireless manner when detecting a change in a voltage or current of the device under test.

The embodiments of the present invention further provide an alarm signal output apparatus, wherein the alarm signal output apparatus can be disposed in a battery position of a device under test, and is connected to a power input end of the device under test; and
the alarm signal output apparatus includes:
at least one battery; and
an alarm signal output unit integrated with the battery;
wherein the alarm signal output unit is electrically connected to the battery, and outputs an alarm signal externally in a wireless manner when detecting a change in a voltage or current of the device under test.

The embodiments of the present invention further provide a detection alarm device, wherein the detection alarm device includes:
a body on which a battery position is disposed, the battery position having a power input end; and
one of the alarm signal output apparatuses described above;
wherein the alarm signal output apparatus is installed in the battery position, and is connected to the power input end.

The embodiments of the present invention further provide a detection alarm platform system, wherein the platform system includes:
at least one of the alarm signal output apparatuses described above;
a user terminal configured to receive and display an alarm signal; and
a management platform in connection communication with the alarm signal output apparatus and the user terminal, configured to receive the alarm signal output by the alarm signal output apparatus, and send the alarm signal to the corresponding user terminal.

The alarm signal output apparatus provided in the embodiments of the present invention can be disposed in a battery position of a device under test, has a small size, occupies less space, and is easy to install. Moreover, an original detection apparatus does not need to be removed entirely when an existing detection apparatus is replaced and upgraded, avoiding a waste of resources. Besides, an alarm signal can be output externally timely in a wireless manner when a danger is found, thus improving the timeliness of outputting the alarm signal.

### Brief Description of the Drawings

FIG. 1 is a schematic structural diagram of an alarm signal output apparatus according to a first embodiment of the present invention;
FIG. 2 is a schematic structural diagram of an alarm signal output apparatus according to a second embodiment of the present invention;
FIG. 3 is a schematic structural diagram of an alarm signal output apparatus according to a third embodiment of the present invention;
FIG. 4 is a schematic diagram of a physical structure of an alarm signal output apparatus according to an embodiment of the present invention;
FIG. 5 is a schematic structural diagram of an alarm detection device according to an embodiment of the present invention;
FIG. 6 is a schematic diagram of a topological structure of a detection alarm platform system according to an embodiment of the present invention;
FIG. 7 is a schematic structural diagram of an alarm signal output unit in an alarm signal output apparatus according to an embodiment of the present invention;
FIG. 8 is a structural diagram of a detection circuit of a detection processing module according to an embodiment of the present invention; and
FIG. 9 is a schematic diagram of a booster circuit in an alarm signal output apparatus according to an embodiment of the present invention.

### Detailed Description

To make the objectives, technical solutions, and advantages of the present invention more comprehensible, the present invention is described below in further detail with reference to the accompanying drawings and embodiments. It should be understood that specific embodiments described here are merely used to explain the present invention but are not used to limit the present invention.

The alarm signal output apparatus provided in the embodiments of the present invention can be disposed in a battery position of a device under test, has a small size, and is easy to install. Moreover, an original detection apparatus does not need to be removed entirely when an existing detection apparatus is upgraded, avoiding a waste of resources. Besides, the upgraded detection apparatus can timely output an alarm signal externally in a wireless manner when finding a danger, thus improving the timeliness of outputting the alarm signal.

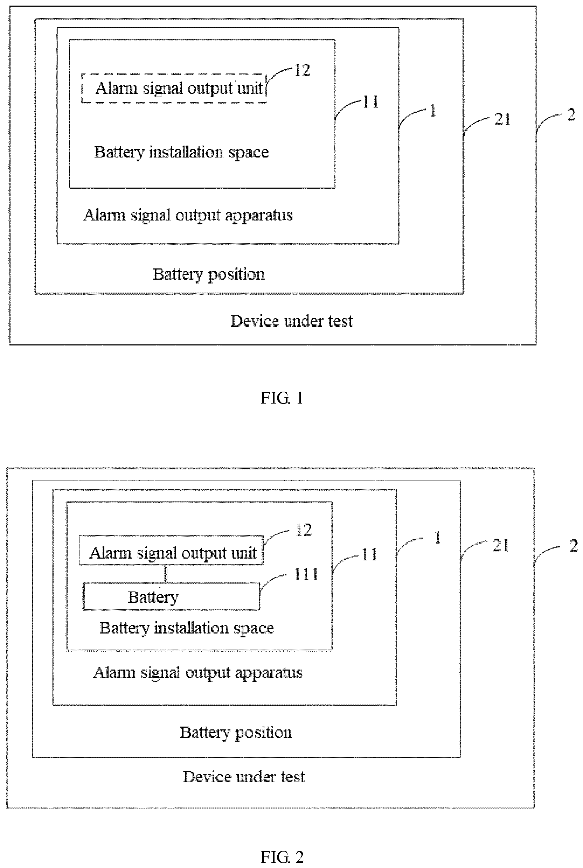

FIG. 1 is a schematic structural diagram of an alarm signal output apparatus according to a first embodiment of the present invention. For ease of description, only portions related to the embodiment of the present invention are illustrated.

With reference to FIG. 1, an alarm signal output apparatus 1 can be disposed in a battery position 21 of a device under test 2, and is connected to a power input end of the device under test 2.

The alarm signal output apparatus 1 includes at least one battery installation space 11; and an alarm signal output unit 12 integrated with the battery installation space 11. The alarm signal output unit 12 can be connected to the device under test 2, and outputs an alarm signal externally in a wireless manner when detecting a change in a voltage or current of the device under test 2.

In the embodiment of the present invention, the device under test 2 can be various alarms (such as a smoke alarm), detectors (such as an infrared detector for human body), sensors (such as an acoustic sensor), or the like.

In the embodiment of the present invention, the alarm signal output apparatus 1 includes at least one battery installation space 11. In an actual application, the number of the battery installation space 11 in the alarm signal output apparatus 1 can be set according to an actual requirement, such that the alarm signal output apparatus 1 can satisfy voltage requirements of the device under test 2 of different types, thus improving the applicability of the alarm signal output apparatus 1.

In the embodiment of the present invention, the battery installation space 11 can be integrated with the alarm signal output unit 12, such that the alarm signal output apparatus 1 has a smaller size, occupies less space, and is more convenient in use.

In the embodiment of the present invention, the alarm signal output unit 12 can be connected to the device under test 2, and detects changes in a current or voltage of the device under test 2 in real time. When detecting an abnormal change in the voltage or current of the device under test 2, the alarm signal output unit 12 can immediately output an alarm signal externally in a wireless manner, to prompt a user that the device under test 2 is abnormal at this moment, so that the user can timely take countermeasures to minimize the loss.

In the embodiment of the present invention, the manner in which the alarm signal output apparatus 1 outputs an alarm signal includes, but is not limited to, WiFi, Z-Wave, Zigbee, RF315MHz, RF433MHz, RF868MHz, RF915MHz, NB-IoT, LoRa, Sigfox, and the like. Outputting an alarm signal externally in the above manner enables the transmission to have higher timeliness and be more convenient, and facilitates the user to find a danger (anomaly) at the earliest time and take countermeasures timely, to minimize the loss caused by the danger or anomaly.

In the embodiment of the present invention, the shape and the size of the alarm signal output apparatus 1 can be set to match with the shape and the size of the battery position 21 of the device under test 2, so as to dispose the alarm signal output apparatus 1 in the battery position 21 of the device under test 2, which implements simple upgrade without affecting the appearance of the device under test 2.

The alarm signal output apparatus provided in the embodiment of the present invention can be disposed in a battery position of a device under test, has a small size, occupies less space, and is easy to install. Moreover, an original detection apparatus does not need to be removed entirely when an existing detection apparatus is replaced and upgraded, avoiding a waste of resources. Besides, an alarm signal can be output externally timely in a wireless manner when a danger is found, thus improving the timeliness of outputting the alarm signal.

FIG. 2 is a schematic structural diagram of an alarm signal output apparatus according to a second embodiment of the present invention. For ease of description, only portions related to the embodiment of the present invention are illustrated.

With reference to FIG. 2, in the alarm signal output apparatus according to the second embodiment of the present invention, a battery 111 is installed in a battery installation space 11 of the alarm signal output apparatus 1. An alarm signal output unit 12 can be electrically connected to the battery 111. The battery 111 is a general-purpose battery. A general-purpose battery can be directly installed to the battery installation space 11 of the alarm signal output apparatus 1 according to the second embodiment of the present invention, while after configuration, a general-purpose battery can be installed in the battery installation space 11 of the alarm signal output apparatus 1 according to the first embodiment.

It should be noted that the general-purpose battery involved above includes a general-purpose lithium battery and the like. The general-purpose battery installed in the battery installation space 11 not only has a small size and is easy to assemble and disassemble, but also can be applied to the device under test 2 having different voltage demands, thus expanding the application range of the alarm signal output apparatus 1.

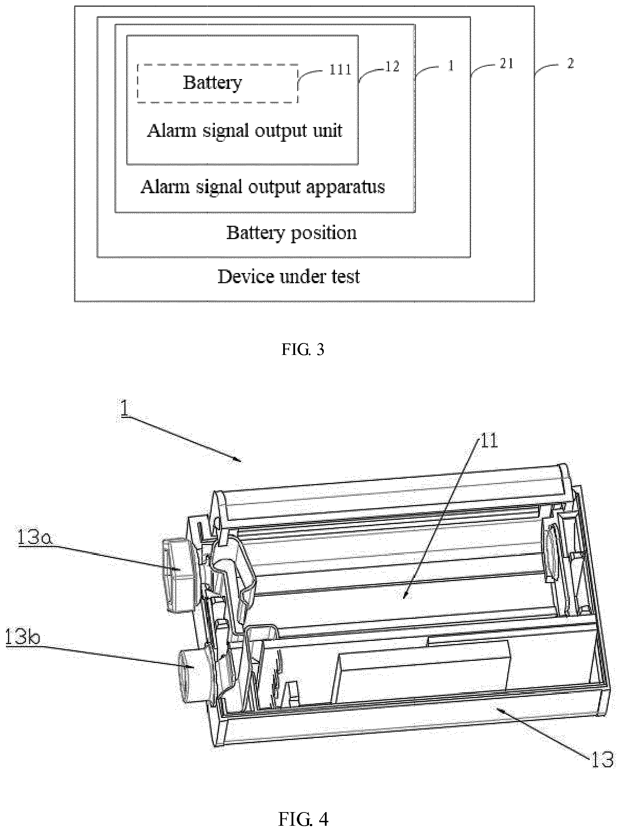

FIG. 3 is a schematic structural diagram of an alarm signal output apparatus according to a third embodiment of the present invention. For ease of description, only portions related to the embodiment of the present invention are illustrated.

With reference to FIG. 3, in the alarm signal output apparatus according to the third embodiment of the present invention, the alarm signal output apparatus 1 includes at least one battery 111; and an alarm signal output unit 12 integrated with the battery 111, wherein the alarm signal output unit 12 is electrically connected to the battery 111. The alarm signal output apparatus 1 provided in the first embodiment includes: at least one battery installation space 11; and an alarm signal output unit 12 integrated with the battery installation space 11; wherein the alarm signal output unit 12 can be connected to the device under test 2.

The alarm signal output apparatuses provided in the first, second, and third embodiments can all be directly disposed in a battery position of a device under test. When an existing detection apparatus is replaced and upgraded, the detection apparatus does not need to be removed entirely. Thus, the installation is very convenient, and little space is occupied, avoiding a waste of resources. Moreover, an alarm signal can be output externally timely in a wireless manner when a danger is found, improving the timeliness of outputting the alarm signal. In addition, their booster circuits enable them to be applied to different types of devices under test, broadening the applicability and universality of their use, which has brought great convenience to users. Also, the cost of replacement and upgrade is lower, being more in line with the requirements of environmental protection.

With reference to FIG. 4, in an embodiment of the present invention, an alarm signal output apparatus 1 includes a shell 13. The shell 13 is provided with a battery installation space 11. An alarm signal output unit 12 can be installed inside the shell 13. One end portion of the shell 13 is provided with a negative terminal 13a and a positive terminal 13b. As the shape and the size of the alarm signal output apparatus 1 match with the shape and the size of the battery position 21 of the device under test 2, when a battery in a battery position 21 of an existing device under test 2 needs to be replaced, convenient upgrade can be implemented by directly installing the alarm signal output apparatus 1 in the battery position 21. The operations are simple, assembly, disassembly and use are convenient, and the appearance of the device under test 2 will not be affected. Other components of the device under test 2 do not need to be removed or changed. The installation is easy, and no additional removal or modification costs are required.

In the embodiment of the present invention, the alarm signal output apparatus 1 can be fixedly assembled into the battery position 21 of the device under test 2 by using a detachable structure (such as a bolt) (not shown in the figure), to prevent the alarm signal output apparatus 1 from being separated from the device under test 2 during use or security inspection, which is more convenient for users to use.

In the first embodiment of the present invention, the battery installation space 11 can be configured to accommodate general-purpose batteries, such that the battery installation space 11 can match with different types of batteries, improving the universality of the battery installation space 11. Therefore, the applicability of the alarm signal output apparatus 1 is more extensive.

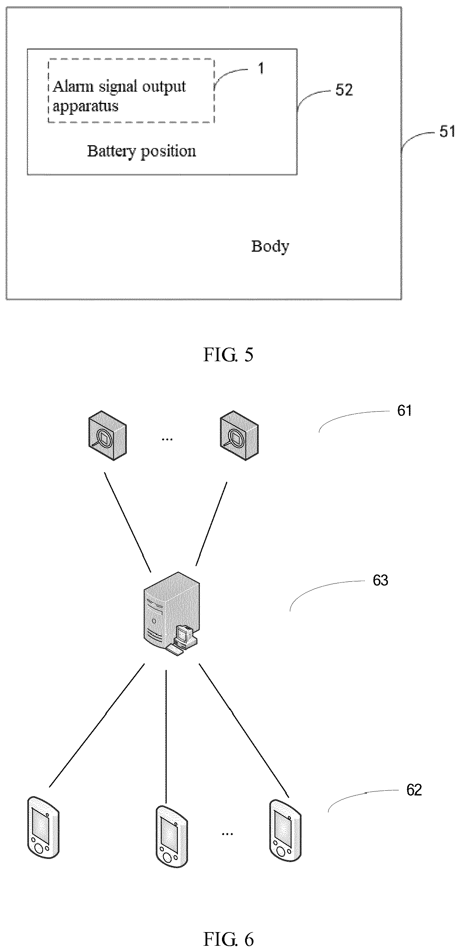

FIG. 5 is a schematic structural diagram of an alarm detection device according to an embodiment of the present invention. For ease of description, only portions related to the embodiment of the present invention are illustrated.

With reference to FIG. 5, an embodiment in the embodiments of the present invention further provides a detection alarm device. The detection alarm device includes a body 51 on which a battery position 52 is disposed, the battery position 52 having a power input end (not shown); and one of the alarm signal output apparatuses 1 in the foregoing embodiments, the alarm signal output apparatus 1 being installed in the battery position 52 and connected to the power input end.

In a preferred embodiment of the present invention, the shape and the size of the alarm signal output apparatus 1 can be set to match with the shape and the size of the battery position 52 of the detection alarm device. During replacement and upgrade, it is only necessary to replace the battery in the battery position 52 of the detection alarm device with the alarm signal output apparatus 1, while other components of the original detection alarm device do not need to be removed. The operations are simple and will not lead to a waste of resources.

FIG. 6 is a schematic diagram of a topological structure of a detection alarm platform system according to an embodiment of the present invention. For ease of description, only portions related to the embodiment of the present invention are illustrated.

With reference to FIG. 6, an embodiment of the present invention further provides a detection alarm platform system. The platform system includes: at least one of the alarm signal output apparatuses 61 as described in the foregoing embodiments; a user terminal 62 configured to receive and display an alarm signal; and a management platform 63 in connection communication with the alarm signal output apparatus 61 and the user terminal 62, configured to receive the alarm signal output by the detection alarm device, and send the alarm signal to the corresponding user terminal 62.

In the embodiment of the present invention, the user terminal 62 is specifically a client terminal such as an alarm APP installed and running on a terminal device. For example, the user terminal can be installed and run on the following terminal devices: a Personal Computer (PC), a notebook computer, a Personal Digital Assistant (PDA), a mobile phone and other devices that can conduct communication.

In the embodiment of the present invention, the user terminal 62 can display information fed back by an alarm signal by means of voice, text or images when receiving the alarm signal, so that users can intuitively and clearly understand the occurrence of abnormal alarm, so as to make corresponding countermeasures.

In the embodiment of the present invention, the management platform 63 can be a server or a server cluster consisting of several servers, or a cloud computing service center. When receiving an alarm signal output by the alarm signal output apparatus, the management platform can timely send the alarm signal to the corresponding user terminal, to prompt the user to cope with the abnormal condition.

In the embodiment of the present invention, the management platform can detect the state of the alarm signal output apparatus in real time. When the alarm signal output apparatus outputs an alarm signal, the management platform can immediately receive the alarm signal and send the alarm signal to corresponding APP application interfaces of respective user terminals timely and accurately after a series of data processing, so that users can obtain the time and place of a danger the first time, and can immediately take corresponding countermeasures, to reduce the loss that may be caused by the danger.

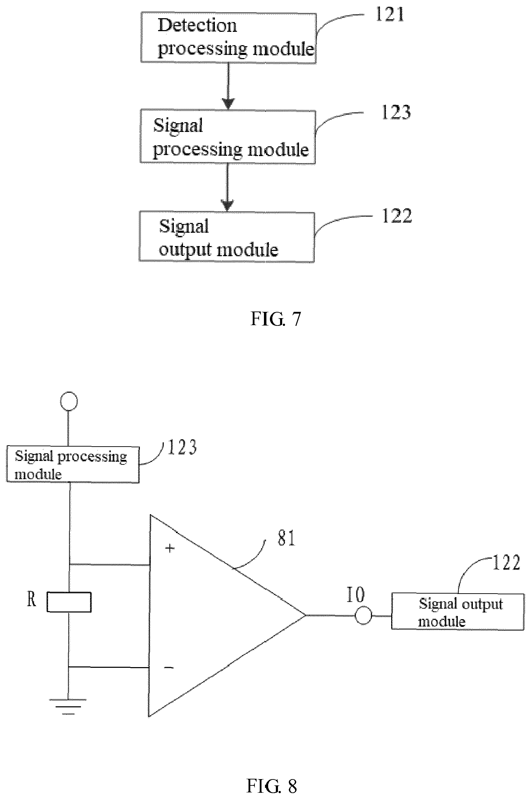

FIG. 7 is a schematic structural diagram of an alarm signal output unit in an alarm signal output apparatus according to an embodiment of the present invention. For ease of description, only portions related to the embodiment of the present invention are illustrated.

As shown in FIG. 7, in the embodiment of the present invention, the alarm signal output unit 12 includes: a detection processing module 121 configured to detect the change in the voltage or current of the device under test 2, and output a state change signal; a signal output module 122 configured to output an alarm signal externally in a wireless manner; and a signal processing module 123 connected to the detection processing module 121 and the signal output module 122 respectively, configured to identify the state change signal output by the detection processing module 121, and control the signal output module 122 to output an alarm signal when judging that the state change signal meets a set condition.

With reference to FIG. 8, in the embodiment of the present invention, the detection processing module 121 can include a detection circuit. The detection circuit includes a comparator 81. Positive and negative input ends of the comparator 81 are connected in parallel to a resistor R1. Moreover, the negative input end of the comparator 81 is grounded, the positive input end is connected to the signal processing module 123, and an 10 port of the comparator 81 can be connected to the signal output module 122. When identifying that the state change signal of the voltage or current output by the detection processing module 121 meets a preset condition, the signal processing module 123 controls the signal output module 122 to output an alarm signal. The preset condition can be that the signal processing module 123 identifies that the state change signal of the voltage or current output by the detection processing module 121 reaches a preset current or voltage change threshold, or the like.

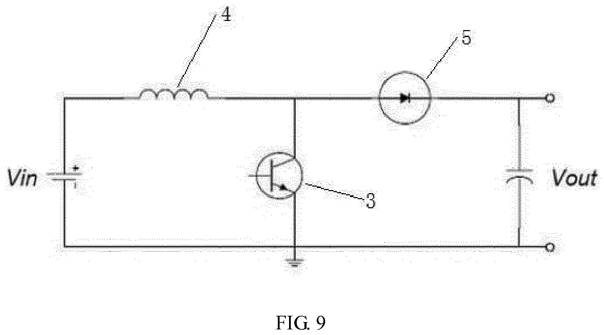

With reference to FIG. 9, in a preferred embodiment of the present invention, the alarm signal output apparatus 1 further includes a booster circuit configured to boost a voltage of a battery installed in the battery installation space 11 to a rated voltage of the device under test 2.

The working principle of the booster circuit is as follows. When a switch tube 3 is switched on, the power supply in the booster circuit forms a loop via an inductor 4 and the switch tube 3, and the current is converted to magnetic energy to be stored in the inductor 4. When the switch tube 3 is switched off, the magnetic energy stored in the inductor 4 is converted to electric energy, to form a current in a direction opposite to the current direction of the power supply. In this case, the voltage generated by the inductor 4 is superimposed on the positive end of the power supply, and a loop is formed via a diode 5 and a load (not shown), so as to achieve the objective of boosting.

In the embodiment of the present invention, upon boosting by the booster circuit, the device under test 2 can be boosted to its rated voltage after its original battery is replaced, so that the device under test 2 can continue to work normally, which can further broaden the application range of the alarm signal output apparatus and make the use more convenient.

In the embodiment of the present invention, the signal output module 122 and the signal processing module 123 can be designed to be independent of each other or integrated into a chip. When the signal output module 122 and the signal processing module 123 are designed to be independent of each other, factors that interfere with each other are reduced when they process (output) signals, and the efficiency and accuracy of signal processing (outputting) are improved. Integrating the signal output module 122 and the signal processing module 123 into a chip can make the whole product smaller and used more conveniently.

The shape and the size of the alarm signal output apparatus provided in the embodiment of the present invention match with the shape and the size of the battery position of the device under test. The alarm signal output apparatus can be directly installed in the battery position of the device under test, and easy upgrade can be completed without removing other components of the original device under test, so that the existing device under test has a function of timely outputting an alarm signal after upgrade, which not only avoids a waste of resources and reduces the cost of assembly and disassembly, but also can output an alarm signal externally timely in a wireless manner when finding a danger, thus improving the timeliness of outputting the alarm signal. In addition, the alarm signal output apparatus can be installed with a general-purpose battery and have a booster circuit, which can be applied to devices under test having different voltage requirements, has extensive applicability, brings great convenience to users, and is more in line with the requirements for environmental protection.

The above descriptions are merely preferred embodiments of the present invention, which are not used to limit the present invention. Any modification, equivalent replacement, improvement and the like made within the spirit and principle of the present invention should all be encompassed in the protection scope of the present invention.

## Claims

1. An alarm signal output apparatus, wherein the alarm signal output apparatus can be disposed in a battery position of a device under test, and is connected to a power input end of the device under test; and
the alarm signal output apparatus comprises:
at least one battery installation space; and
an alarm signal output unit integrated with the battery installation space;
wherein the alarm signal output unit can be connected to the device under test, and outputs an alarm signal externally in a wireless manner when detecting a change in a voltage or current of the device under test.

2. The alarm signal output apparatus according to claim 1, wherein the alarm signal output unit comprises:
a detection processing module configured to detect the change in the voltage or current of the device under test, and output a state change signal;
a signal output module configured to output an alarm signal externally in a wireless manner; and
a signal processing module connected to the detection processing module and the signal output module respectively, configured to identify the state change signal output by the detection processing module, and control the signal output module to output an alarm signal when judging that the state change signal meets a set condition.

3. The alarm signal output apparatus according to claim 1, wherein the alarm signal output apparatus further comprises:
a booster circuit configured to boost a voltage of a battery installed in the battery installation space to a rated voltage of the device under test.

4. The alarm signal output apparatus according to claim 2, wherein the signal output module and the signal processing module are independent of each other or integrated into a chip.

5. An alarm signal output apparatus, wherein the alarm signal output apparatus can be disposed in a battery position of a device under test, and is connected to a power input end of the device under test; and
the alarm signal output apparatus comprises:
at least one battery installation space in which a battery is installed; and
an alarm signal output unit integrated with the battery installation space;
wherein the alarm signal output unit can be electrically connected to the battery, and outputs an alarm signal externally in a wireless manner when detecting a change in a voltage or current of the device under test.

6. The alarm signal output apparatus according to claim 5, wherein the alarm signal output unit comprises:
a detection processing module configured to detect the change in the voltage or current of the device under test, and output a state change signal;
a signal output module configured to output an alarm signal externally in a wireless manner; and
a signal processing module connected to the detection processing module and the signal output module respectively, configured to identify the state change signal output by the detection processing module, and control the signal output module to output an alarm signal when judging that the state change signal meets a set condition.

7. The alarm signal output apparatus according to claim 5, wherein the alarm signal output apparatus further comprises:
a booster circuit configured to boost a voltage of the battery installed in the battery installation space to a rated voltage of the device under test.

8. The alarm signal output apparatus according to claim 6, wherein the signal output module and the signal processing module are independent of each other or integrated into a chip.

9. An alarm signal output apparatus, wherein the alarm signal output apparatus can be disposed in a battery position of a device under test, and is connected to a power input end of the device under test; and
the alarm signal output apparatus comprises:
at least one battery; and
an alarm signal output unit integrated with the battery;
wherein the alarm signal output unit is electrically connected to the battery, and outputs an alarm signal externally in a wireless manner when detecting a change in a voltage or current of the device under test.

10. The alarm signal output apparatus according to claim 9, wherein the alarm signal output unit comprises:
a detection processing module configured to detect the change in the voltage or current of the device under test, and output a state change signal;
a signal output module configured to output an alarm signal externally in a wireless manner; and
a signal processing module connected to the detection processing module and the signal output module respectively, configured to identify the state change signal output by the detection processing module, and control the signal output module to output an alarm signal when judging that the state change signal meets a set condition.

11. The alarm signal output apparatus according to claim 9, wherein the alarm signal output apparatus further comprises:
a booster circuit configured to boost a voltage of a battery installed in the battery installation space to a rated voltage of the device under test.

12. The alarm signal output apparatus according to claim 10, wherein the signal output module and the signal processing module are independent of each other or integrated into a chip.

13. A detection alarm device, wherein the detection alarm device comprises:
a body on which a battery position is disposed, the battery position having a power input end; and
the alarm signal output apparatus according to any of claims 1, 5 and 9;
wherein the alarm signal output apparatus is installed in the battery position, and is connected to the power input end.

14. A detection alarm platform system, wherein the platform system comprises:
at least one alarm signal output apparatus according to any of claims 1, 5 and 9;
a user terminal configured to receive and display an alarm signal; and
a management platform in connection communication with the alarm signal output apparatus and the user terminal, configured to receive the alarm signal output by the alarm signal output apparatus, and send the alarm signal to the corresponding user terminal.
